(19) Europäisches Patentamt
European Patent Office
Office européen des brevets

(11) EP 1 363 498 B1

(12) # EUROPÄISCHE PATENTSCHRIFT

(45) Veröffentlichungstag und Bekanntmachung des Hinweises auf die Patenterteilung:
**25.05.2005 Patentblatt 2005/21**

(21) Anmeldenummer: **02712814.9**

(22) Anmeldetag: **12.01.2002**

(51) Int Cl.7: **A01N 47/14**
// (A01N47/14, 43:50), A01N43:80

(86) Internationale Anmeldenummer:
**PCT/EP2002/000236**

(87) Internationale Veröffentlichungsnummer:
**WO 2002/054871 (18.07.2002 Gazette 2002/29)**

(54) **FUNGIZIDE MISCHUNGEN AUS IMIDAZOLDERIVATE UND DITHIOCARBAMATE**

FUNGICIDAL MIXTURES OF IMIDAZOLE DERIVATIVES AND DITHIOCARBAMATES

MELANGES FONGICIDES DES DERIVES D'IMIDAZOLES ET DES DITHIOCARBAMATES

(84) Benannte Vertragsstaaten:
**AT BE CH CY DE DK ES FI FR GB GR IE IT LI LU MC NL PT SE TR**

(30) Priorität: **16.01.2001 DE 10101923**

(43) Veröffentlichungstag der Anmeldung:
**26.11.2003 Patentblatt 2003/48**

(73) Patentinhaber: **BASF AKTIENGESELLSCHAFT**
**67056 Ludwigshafen (DE)**

(72) Erfinder:
- **PTOCK, Arne**
  **67065 Ludwigshafen (DE)**
- **AMMERMANN, Eberhard**
  **64646 Heppenheim (DE)**
- **STIERL, Reinhard**
  **67112 Mutterstadt (DE)**
- **LORENZ, Gisela**
  **67434 Hambach (DE)**
- **STRATHMANN, Siegfried**
  **67117 Limburgerhof (DE)**
- **SCHERER, Maria**
  **76829 Landau (DE)**
- **SCHELBERGER, Klaus**
  **67161 Gönnheim (DE)**
- **REDDIG, Achim**
  **76829 Landau (DE)**

(56) Entgegenhaltungen:
**EP-A- 0 298 196**
**EP-A- 1 028 125**
**WO-A-97/06171**
**WO-A-98/47370**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 363 498 B1

Printed by Jouve, 75001 PARIS (FR)

## Beschreibung

Die vorliegende Erfindung betrifft fungizide Mischungen, enthaltend

A) Imidazolderivate der Formel I

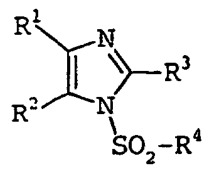

I

in der $R^1$ und $R^2$ Halogen und Phenyl, welches durch Halogen oder $C_1$-$C_4$-Alkyl substituiert sein kann, bedeuten oder

$R^3$ Cyano oder Halogen, und

$R^4$ Di-($C_1$-$C_4$-alkyl)amino oder Isoxazol-4-yl, welches zwei $C_1$-$C_4$-Alkylreste tragen kann, bedeuten; und

B) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId)

in einer synergistisch wirksamen Menge.

Außerdem betrifft die Erfindung Verfahren zur Bekämpfung von Schadpilzen mit Mischungen der Verbindungen I und II und die Verwendung der Verbindungen I und der Verbindungen II zur Herstellung derartiger Mischungen.

Die Imidazolderivate der Formel I, ihre Herstellung und ihre Wirkung gegen Schadpilze sind aus der Literatur bekannt (EP-A 298 196, WO-A 97/06171).

Ebenfalls bekannt sind Dithiocarbamate II

IIa: common name: Mancozeb (US 3,379,610);
IIb: common name: Maneb (US 2,504,404);
IIc: ehem. common name: Metiram (US 3,248,400);
IId: common name: Zineb (US 2,457,674),

deren Herstellung und deren Wirkung gegen Schadpilze.

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die Formel I repräsentiert insbesondere Imidazolderivate der Formel I, in der $R^1$ Halogen, insbesondere Chlor bedeutet und $R^2$ für Tolyl, insbesondere p-Tolyl steht.

Gleichermaßen bevorzugt sind Verbindungen der Formel I, in der $R^4$ Dimethylamino bedeutet.

Daneben ist die Verbindung der Formel Ia (common name: cyazofamid) besonders bevorzugt. Sie ist aus EP-A 298 196 bekannt.

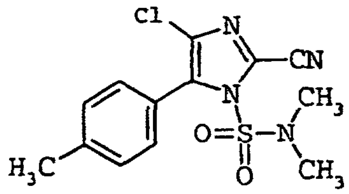

Ia

Daneben sind Verbindungen der Formel I bevorzugt, in denen $R^4$ 3,5-Dimethylisoxazol-4-yl bedeutet.

Bevorzugt setzt man bei der Bereitstellung der Mischungen die reinen Wirkstoffe I und II (IIa bis IId) ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:500, insbesondere 10:1 bis 1:200, vorzugsweise 1:1 bis 1:50 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.

Die Aufwandmengen liegen dabei für die Verbindungen I bei 0,01 bis 1 kg/ha, vorzugsweise 0,05 bis 0,5 kg/ha, insbesondere 0,05 bis 0,3 kg/ha.

Die Aufwandmengen für die Verbindungen II liegen entsprechend bei 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen:

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel: Protektive Wirksamkeit gegen Rebenperonospora verursacht durch *Plasmopara viticola*

Blätter von Topfreben der Sorte "Müller-Thurgau" wurden mit wässriger Wirkstoffaufbereitung, die mit einer Stammlösung bestehend aus 10 % Wirkstoff, 85 % Cyclohexanon und 5 % Emulgiermittel angesetzt wurde, bis zur Tropfnässe besprüht. Am folgenden Tag wurden die Unterseiten der Blätter mit einer wäßrigen Zoosporenaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Tabelle A -

| Einzelwirkstoffe | | | |
|---|---|---|---|
| Beispiel | Wirkstoff | Wirkstoffkonzentration in der Spritzbrühe [ppm] | Wirkungsgrad in % der unbehandelten Kontrolle |
| 1 | Kontrolle (unbehandelt) | (90 % Befall) | 0 |
| 2 | Ia | 0,2<br>0,1<br>0,05 | 89<br>78<br>56 |
| 4 | IIa | 10<br>5 | 72<br>11 |
| 5 | IIc | 10<br>5 | 11<br>0 |

Tabelle B -

| erfindungsgemäße Kombinationen | | | |
|---|---|---|---|
| Beispiel | Wirkstoffmischung Konzentration Mischungsverhältnis | beobachteter Wirkungsgrad | berechneter Wirkungsgrad*) |
| 6 | Ia + IIa<br>0,05 + 5 ppm<br>1 : 10 | 100 | 60 |
| 7 | Ia + IIa<br>0,1 + 0,5 ppm<br>1 : 50 | 100 | 80 |
| 8 | Ia + IIa<br>0,2 + 5 ppm<br>1 : 25 | 100 | 90 |
| 9 | Ia + IIa<br>0,05 + 10 ppm<br>1 : 200 | 100 | 88 |
| 10 | Ia + IIc<br>0,05 + 5 ppm<br>1 : 10 | 100 | 56 |
| | Ia + IIc | | |

*) berechnet nach der Colby-Formel

Tabelle B - (fortgesetzt)

| erfindungsgemäße Kombinationen | | | |
|---|---|---|---|
| Beispiel | Wirkstoffmischung Konzentration Mischungsverhältnis | beobachteter Wirkungsgrad | berechneter Wirkungsgrad*) |
| 11 | 0,1 + 5 ppm<br>1 : 50 | 100 | 78 |
| 12 | Ia + IIc<br>0,2 + 5 ppm<br>1 : 25 | 100 | 89 |
| 13 | Ia + IIc<br>0,05 + 10 ppm<br>1 : 200 | 100 | 60 |

*) berechnet nach der Colby-Formel

Aus den Ergebnissen der Versuche geht hervor, daß der beobachtete Wirkungsgrad in allen Mischungsverhältnissen höher ist, als nach der Colby-Formel vorausberechnet.

**Patentansprüche**

**1.** Fungizide Mischungen, enthaltend

A) Imidazolderivate der Formel I

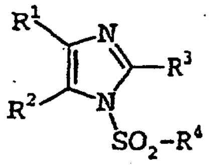

I

in der $R^1$ und $R^2$ Halogen und Phenyl, welches durch Halogen oder $C_1$-$C_4$-Alkyl substituiert sein kann, bedeuten,

$R^3$ Cyano oder Halogen, und

$R^4$ Di-($C_1$-$C_4$-alkyl)amino oder Isoxazol-4-yl, welches zwei $C_1$-$C_4$-Alkylreste tragen kann, bedeuten; und

B) ein Dithiocarbamat (II) ausgewählt aus der Gruppe

- Mangan-ethylenbis(dithiocarbamat) (Zinkkomplex) (IIa),
- Mangan-ethylenbis(dithiocarbamat) (IIb),
- Zinkammoniat-ethylenbis(dithiocarbamat) (IIc) und
- Zink-ethylenbis(dithiocarbamat) (IId)

in einer synergistisch wirksamen Menge.

**2.** Fungizide Mischung nach Anspruch 1, wobei das Imidazolderivat I der Formel Ia

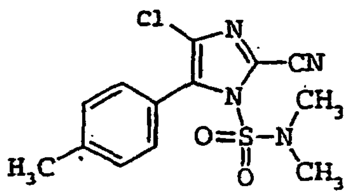

Ia

entspricht.

**3.** Fungizide Mischung nach einem der Ansprüche 1 bis 2, enthaltend Mangan-ethylenbis(dithiocarbamat) (Zinkkomplex) (IIa).

**4.** Fungizide Mischung nach einem der Ansprüche 1 bis 2, enthaltend Mangan-ethylenbis(dithiocarbamat) (IIb).

**5.** Fungizide Mischung nach einem der Ansprüche 1 bis 2, enthaltend Zinkammoniat-ethylen bis (dithiocarbamat) (IIc).

**6.** Fungizide Mischung nach einem der Ansprüche 1 bis 2, enthaltend Zinkethylenbis(dithiocarbamat) (IId).

**7.** Fungizide Mischung nach einem der Ansprüche 1 bis 6, **dadurch gekennzeichnet, daß** das Gewichtsverhältnis der Verbindung I zu der Verbindung II 20:1 bis 1:500 beträgt.

**8.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit Imidazolderivaten der Formel I gemäß Anspruch 1 und Dithiocarbamaten der Formel II gemäß Anspruch 1 behandelt.

**9.** Verfahren nach Anspruch 8, **dadurch gekennzeichnet, daß** man Imidazolderivate der Formel I gemäß Anspruch 1, und Dithiocarbamate der Formel II gemäß Anspruch 1 gleichzeitig, und zwar gemeinsam oder getrennt, oder nacheinander ausbringt.

**10.** Verfahren nach Anspruch 8 oder 9, **dadurch gekennzeichnet, daß** man die Imidazolderivate der Formel I gemäß Anspruch 1 in einer Menge von 0,01 bis 2,5 kg/ha aufwendet.

**11.** Verfahren nach den Ansprüchen 8 bis 10, **dadurch gekennzeichnet, daß** man die Dithiocarbamate der Formel II gemäß Anspruch 1 in einer Menge von 0,01 bis 10 kg/ha aufwendet.

**12.** Fungizides Mittel, das in zwei Teilen konditioniert ist, wobei der eine Teil Imidazolderivate der Formel I gemäß Anspruch 1 in einem festen oder flüssigen Träger enthält und der andere Teil Dithiocarbamate der Formel II gemäß Anspruch 1 in einem festen oder flüssigen Träger enthält.

## Claims

**1.** A fungicidal mixture, comprising

A) imidazole derivatives of the formula I

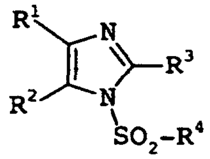

I

in which $R^1$ and $R^2$ are halogen or phenyl, which may be substituted by halogen or $C_1$-$C_4$-alkyl,

$R^3$ is cyano or halogen, and

$R^4$ is di($C_1$-$C_4$-alkyl)amino or isoxazol-4-yl, which may carry two $C_1$-$C_4$-alkyl radicals; and

B) a dithiocarbamate (II) selected from the group consisting of

- manganese ethylenebis(dithiocarbamate) (zinc complex) (IIa),
- manganese ethylenebis(dithiocarbamate) (IIb),
- zinc ammoniate ethylenebis(dithiocarbamate) (IIc) and
- zinc ethylenebis(dithiocarbamate) (IId)

in a synergistically effective amount.

**2.** A fungicidal mixture as claimed in claim 1, where the imidazole derivative I corresponds to the formula Ia.

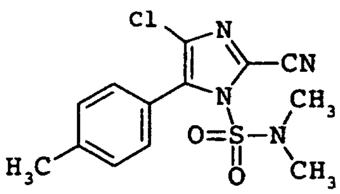

Ia

**3.** A fungicidal mixture as claimed in either of claims 1 or 2, comprising manganese ethylenebis(dithiocarbamate) (zinc complex) (IIa).

**4.** A fungicidal mixture as claimed in either of claims 1 or 2, comprising manganese ethylenebis(dithiocarbamate) (IIb).

**5.** A fungicidal mixture as claimed in either of claims 1 or 2, comprising zinc ammoniate ethylenebis(dithiocarbamate) (IIc).

**6.** A fungicidal mixture as claimed in either of claims 1 or 2, comprising zinc ethylenebis(dithiocarbamate) (IId).

**7.** A fungicidal mixture as claimed in any of claims 1 to 6, wherein the weight ratio of the compound I to the compound II is from 20:1 to 1:500.

**8.** A method for controlling harmful fungi, which comprises treating the harmful fungi, their habitat or the plants, seeds, soils, areas, materials or spaces to be kept free from them with imidazole derivatives of the formula I as set forth in claim 1 and dithiocarbamates of the formula II as set forth in claim 1.

**9.** A method as claimed in claim 8, wherein imidazole derivatives of the formula I as set forth in claim 1 and dithiocarbamates of the formula II as set forth in claim 1 are applied simultaneously, that is either together or separately, or successively.

**10.** A method as claimed in claim 8 or 9, wherein the imidazole derivatives of the formula I as set forth in claim 1 are applied in an amount of from 0.01 to 2.5 kg/ha.

**11.** A method as claimed in any of claims 8 to 10, wherein the dithiocarbamates of the formula II as set forth in claim 1 are applied in an amount of from 0.01 to 10 kg/ha.

**12.** A fungicidal composition, which is conditioned in two parts, one part comprising imidazole derivatives of the formula I as set forth in claim 1 in a solid or liquid carrier and the other part comprising dithiocarbamates of the formula II as set forth in claim 1 in a solid or liquid carrier.

**Revendications**

1. Mélanges fongicides, contenant

A) des dérivés d'imidazole de la formule I :

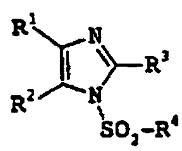

I

dans laquelle $R^1$ et $R^2$ représentent de l'halogène et un groupe phényle, qui peut être substitué par de l'halogène ou un groupe alkyle en $C_1$-$C_4$,
$R^3$ est un groupe cyano ou de l'halogène, et
$R^4$ représente un groupe di-(alkyle en $C_1$-$C_4$)-amino ou isoxazol-4-yle, qui peut porter deux radicaux alkyle en $C_1$-$C_4$, et
B) un dithiocarbamate (II) choisi parmi le groupe

- de l'éthylènebis-(dithiocarbamate) de manganèse (complexe de zinc) (IIa),
- de l'éthylènebis-(dithiocarbamate) de manganèse (IIb),
- de l'éthylènebis-(dithiocarbamate) de zinc ammoniacé (IId), et
- d'éthylènebis-(dithiocarbamate) de zinc (IId),

en une quantité efficace du point de vue synergique.

2. Mélange fongicide suivant la revendication 1, dans lequel le dérivé d'imidazole I répond à la formule Ia :

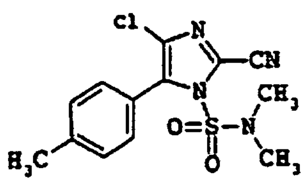

Ia.

3. Mélange fongicide suivant l'une des revendications 1 et 2, contenant de l'éthylènebis-(dithiocarbamate) de manganèse (complexe de zinc) (IIa).

4. Mélange fongicide suivant l'une des revendications 1 et 2, contenant de l'éthylènebis-(dithiocarbamate) de manganèse (IIb).

5. Mélange fongicide suivant l'une des revendications 1 et 2, contenant de l'éthylènebis-(dithiocarbamate) de zinc ammoniacé (IIc).

6. Mélange fongicide suivant l'une des revendications 1 et 2, contenant de l'éthylènebis-(dithiocarbamate) de zinc (IId).

7. Mélange fongicide suivant l'une des revendications 1 à 6, **caractérisé en ce que** le rapport pondéral entre le composé I et le composé II est de 20/1 à 1/500.

8. Procédé pour lutter contre des champignons nuisibles, **caractérisé en ce qu'**on traite les champignons nuisibles, leur espace vital ou les plantes, semences, sols, surfaces, matériels ou espaces qui doivent en être protégés, par des dérivés d'imidazole de la formule I suivant la revendication 1 et des dithiocarbamates de la formule II suivant la revendication 1.

**9.** Procédé suivant la revendication 8, **caractérisé en ce qu'**on répand des dérivés d'imidazole de la formule I suivant la revendication 1 et des dithiocarbamates de la formule II suivant la revendication 1 simultanément, et cela conjointement ou séparément, ou successivement.

**10.** Procédé suivant l'une des revendications 8 et 9, **caractérisé en ce qu'**on applique les dérivés d'imidazole de la formule I suivant la revendication 1 en une quantité de 0,01 à 2,5 kg/ha.

**11.** Procédé suivant l'une des revendications 8 à 10, **caractérisé en ce qu'**on applique les dithiocarbamates de la formule II suivant la revendication 1 en une quantité de 0,01 à 10 kg/ha.

**12.** Produit fongicide, qui est conditionné en deux parties, l'une des parties contenant des dérivés d'imidazole de la formule I suivant la revendication 1 dans un support solide ou liquide, l'autre partie contenant des dithiocarbamates de la formule II suivant la revendication 1 dans un support solide ou liquide.